# EUROPEAN PATENT APPLICATION

(11) **EP 4 571 516 A1**
(43) Date of publication of application: **18.06.2025**
(21) Application number: 23216941.7
(22) Date of filing: 15.12.2023
(51) Int. Cl.: G06F 9/54, H04L 69/18

(54) **COMMUNICATION INTERFACE ARCHITECTURE FOR PROVIDING DATA FROM A DATA SOURCE TO A DATA SINK**

(71) Applicant: BASF SE, 67056 Ludwigshafen am Rhein (DE)
(72) Inventor: Gau, Sebastian, 67061 Ludwigshafen am Rhein (DE)
(74) Representative: Eisenführ Speiser

(57) **Abstract**

The invention refers to a communication interface architecture for providing data from a data source to a data sink. A data source interface is configured to access data from one or more data sources and provide requested data to a data sink. A data sink interface is configured to communicate with the data source interface for requesting data from the one or more data sources to be provided to the data sink, wherein the data source interface and/or the data sink interface is configured to provide a data exchange architecture that is communication protocol independent and extended by a remote procedure call protocol.

## Description

### FIELD OF THE INVENTION

The invention refers to a communication interface architecture, method and computer program product for providing data from a data source to a data sink. Further, the invention refers to a distributed computing system utilizing the communication interface architecture and a data exchange method utilizing the communication interface architecture.

### BACKGROUND OF THE INVENTION

In modern software design, microservices play an important role in order to enable an easy and effective exchanging of components, functions and services, but also to allow for distributing of computing tasks over a plurality of computers without a centralized control. However, utilizing microservices leads to an increased communication load between the distributed computers. Thus, it would be advantageous to provide a communication interface that improves the data communication and is highly adaptable.

### SUMMARY OF THE INVENTION

The decoupling of components and layers of data communication architectures has a particular relevance in modular systems, which are subject to frequent changes. For example, subcomponents are only loosely coupled to other subcomponents within an architecture to enable interchanging of components without influencing other components. This is in particular relevant in modern software design, in which microservices play an important role and are utilized for facilitating distributed computing. This is in particular relevant in modern production applications, in particular, in chemical production applications, in which data sources and services are distributed over a plurality of computer systems and production data has to be exchanged and utilized in other parts of the production frequently. In such applications it is advantageous if the respective data services are decoupled from respective upper layers of the system, for instance, enterprise resource planning layers, manufacturing execution system layer, etc.

Since the invention provides a communication interface architecture that provides between a data source interface and a data sink interface a data exchange architecture that is communication protocol independent and extended by a remote procedure call protocol, an adaptable communication interface is provided that can be adapted to modern software architectures, in particular, to the utilization of microservices and distributed computing.

In the first aspect of the invention a communication interface architecture is presented for providing data from a data source to a data sink, wherein the architecture comprises a) an data source interface configured to access data from one or more data sources and providing requested data to a data sink, and b) a data sink interface configured to communicate with the data source interface for requesting data from the one or more data sources to be provided by to the data sink, wherein the data source interface and/or the data sink interface is configured to provide a data exchange architecture that is communication protocol independent and extended by a remote procedure call protocol.

The communication interface architecture is provided as service layer between the data source and the data sink and can be part of the data source interface, the data sink interface or both. The communication interface architecture provides the rules, protocols and structures for a data exchange between data sources and data sinks. The participants of the data exchange, i.e. the data source and the data sink, are defined by different address spaces. Thus, the data source and data sink can refer to different computer systems or to the same system comprising different address spaces. Preferably, the communication interface architecture is configured to control data exchange in chemical production systems. For example, the communication interface architecture can be part of a computing framework for processing plant process data acquired with respect to a production process of an industrial plant, wherein the plant process data is provided on one or more data sources and is processed on one or more data sinks.

A data source can refer to any computation system or part of a computation system or part of a computation that can provide data. For example, the data source can refer to a data base, a historian, a sensor, etc. A data sink can refer to any computation systems that utilizes data for further processing. For example, a data sink can be an application, a service, a process, etc. that utilize respective data. In some cases a computing system can be a data source for one application but a data sink for another application. Thus, the term data sources and data sink relate to a specific function during a data exchange performed by a computing system and can change depending on the respective application.

The data exchange architecture utilized between the data source interface and the data sink interface for data exchange can be any architecture that is communication protocol independent and thus is configured to utilize different communication protocols with the semantic layer of the data exchange architecture. A remote procedure call protocol defines an inter-process communication that causes a procedure, for instance, subroutine, or service, to be executed on a different address space than the process utilizing the remote procedure call protocol. The different address space can refer, for instance, to another part of the computer or another physically different computing system. Moreover, the advantage of a remote procedure call protocol is that this protocol can be utilized in the same way as a local procedure call that calls a procedure on the same address space. Thus there is no need to implement specific details of the remote interaction into the calling process making the utilization and implementation of remote procedure call protocols easy and straight forward.

Preferably, the data exchange architecture comprises a protocol layer that is independent of a semantic layer, wherein the semantic layer defines a data model and the protocol layer defines the communication utilizing the data model of the semantic model. The semantic layer of the data exchange architecture defines a data model of the data exchange architecture. A data model is an abstract model that organizes relations between data and entities and/or relations between the data. Preferable, the data model defines a relation between the data and properties of real world entities, however the entities can also be more abstract. In particular, the data model can define a data structure, data format or data notation. A protocol binding connects the protocol layer to the semantic layer and defines the utilization of the data model in the communication utilizing the data exchange architecture. Preferably the data exchange architecture is the OPC unified architecture (OPC UA). The OPC UA is a cross-platform, open source IEC62541 standard for data exchange, which is communication protocol independent. The remote procedure call protocol extending the data exchange architecture is preferably gRPC or SOAP protocol. gRPC is a free and cross-platform open source high perfomance remote procedure call framework that utilizes protocol buffers as the interface description language. SOAP is a messaging protocol specification for exchanging structured data utilizing XML Information Sets as message format. Preferably the remote procedure protocol call is gRPC. Thus, it is preferred that the extended data exchange architecture is an OPC UA architecture extended by a gRPC protocol.

In an embodiment, the extended data exchange architecture includes translations of data models of the data exchange architecture into a respective data encoding system of the remote procedure call protocol. Translating data models of the data exchange architecture into a respective data encoding system of the remote procedure call protocol utilized for the extension allows to utilize the data model of the data exchange architecture in the remote procedure call protocol. In a preferred example the extended data exchange architecture is OPC UA and a protocol buffer interface description language interface is utilized for translating information models of the OPC UA into respective protocol buffers, wherein information models of OPC UA are the data models of OPC UA. The respective protocol buffers can then be utilized for the data communication and allow to utilize the information models of the OPC UA by utilizing the protocol buffers of gRPC. Preferably, the translated data models are predetermined such that the most commonly used data models are translated. In particular, not all data models have to be translated to provide a useful additional functionality for the data communication in the extended data exchange architecture.

In an embodiment the extended data exchange architecture includes a transpiler for transpiling the data models of the data exchange architecture into a respective data encoding system of the remote procedure call protocol. The transpiler also called a transcompiler prefers to a translation protocol that allows to translate source code written in one programming language into an equivalence source code in another programming language. Thus, a transpiler converts between programming languages that operate approximately at the same level of abstraction. In the embodiment the transpiler is configured to translate the data models of the data exchange architecture into the respective data encoding system of the remote procedure call protocol. Thus, utilizing the transpiler, a user can simply utilize the data models of the data exchange architecture and by transpiling the data models implement the data models in the respective remote procedure call protocol. For example, if the data exchange architecture is OPC UA the extended OPC UA can include a transpiler for transpiling OPC UA NodeSet files that refer to the information model of OPC UA into the protocol buffer interface description language.

In an embodiment, the data source interface is configured to provide at least two ports for being accessed by the data sink interface, wherein at least one port is configured to utilise the data exchange architecture data transport protocol and at least one other port is configure to utilize the remote procedure call data transport protocol for communication. For example, at least one port can be configured to utilize the OPC UA data transfer protocol and at least one other port can be configured to utilize protocol buffers transport protocol for data communication. In this way a data source interface allows to utilize both the common data exchange architecture data transport protocols and the new data transport protocols of the extended data exchange architecture. This kind of implementation increases the compatibility of the communication interface architecture.

In an embodiment, the extended data exchange architecture includes for each data model of the data exchange architecture a translation into a respective data encoding system of the remote procedure call protocol. In case for each data model of data exchange architecture a translation is provided into the respective data encoding system of the remote procedure call protocol it can be regarded that the remote procedure call protocol is completely implemented into the data exchange architecture such that all functionalities provided by the data exchange architecture can also be utilized in the extended data exchange architecture. For example, for this case an extended OPC UA includes a protocol buffer for each information model of the OPC UA based on the protocol buffer interface description language.

In a further aspect of the invention a distributed computing system is presented comprising a plurality of computers comprising the communication interface architecture as described above.

In a further aspect of the invention a communication interface method is presented for providing data from a data source to a data sink, wherein the method comprises a) providing an data source interface configured to access data from one or more data sources and providing requested data to a data sink, and b) providing a data sink interface allowing a data sink to communicate with the data source interface for requesting data from the one or more data sources, wherein the data source interface is configured to provide a data exchange architecture that is communication protocol independent and extended by a remote procedure call protocol.

In a further aspect of the invention a data exchange method is presented for transferring data between a data source and a data sink utilizing the communication interface architecture as described above, wherein the method comprises requesting and receiving, at a data sink, data from a data source based on the extended data exchange architecture.

In a further aspect of the invention a computer program product is presented for providing data from a data source to a data sink, wherein the computer program product causes a communication interface architecture as described above to carry out the method as described above.

It shall be understood that the method as described above, the apparatuses as described above and the computer program product as described above have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows schematically and exemplarily a distributed computing system comprising a communication interface architecture,
Fig. 2 and 3 shows schematically and exemplarily implementations of the communication interface architecture, and
Fig. 4 shows schematically and exemplarily a computer framework for processing plant process data utilizing the communication interface architecture.

### DETAILD DESCRIPTION OF DRAWINGS

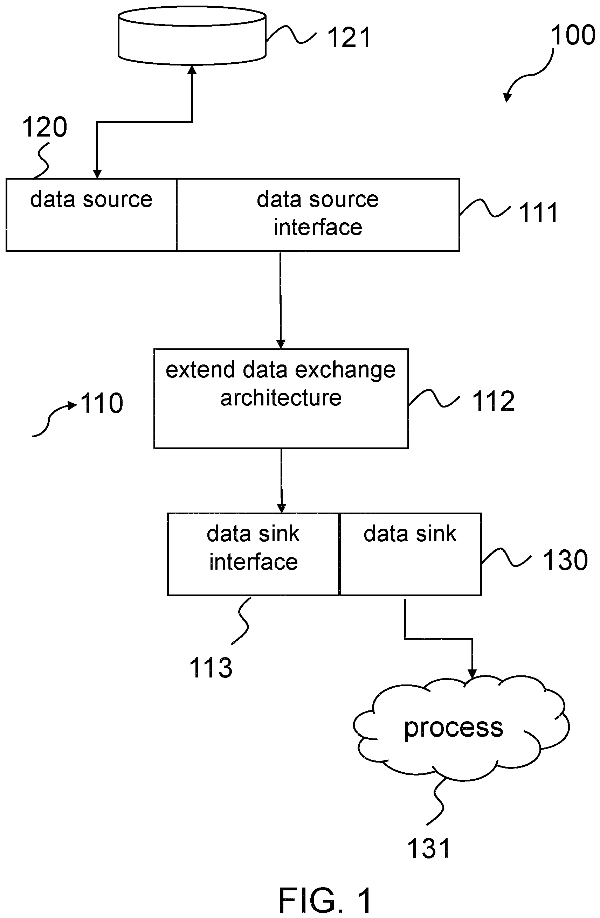

Fig. 1 shows schematically and exemplarily a distributed computing system 100 comprising in this case two computers 120 and 130. In this example computer 120 refers to a data source that is configured to control and access data stored on a data base 121. Although in this example, data source 120 is described as a computer, data source 120 can also be another device, for instance, a sensor, a historian database, etc. Computer 130 is an example of a data sink running a process 131 that is based on data that is stored on database 121. Thus, computer 130 has to access data stored on database 121 that is controlled by computer 120 as data source. Thus, the data for the process 131 has to be transferred from the computer 120 as data source to the computer 130 as data sink. For this data transfer the distributed computing system 100 utilizes communication interface architecture 110.

Communication interface architecture 110 comprises a data source interface 111 provided by the computer 120 acting as data source and data sink interface 113 provided by computer 130 acting as data sink. The data source interface 111 is configured to access the data from data base 121, for instance, utilizing the respective controlling mechanism provided by the computer 120 acting as data source. Thus, data source interface 111 is configured for providing the requested data to the data sink. The data sink interface 113 is configured to request respective data from the data source, via the data source interface 111. The data exchange is then performed utilizing the extended data exchange architecture 112. The extended data exchange architecture 112 refers to a data exchange architecture that is communication protocol independent and has been extended by a remote procedure call protocol. Extending the communication protocol independent data exchange architecture by a remote procedure call protocol allows to utilize the more effective communication protocols and services of remote procedure call protocol together with commonly used data exchange architectures. This provides the advantage that distributed computing systems can utilize effective communication protocol independent data exchange architectures while at the same time allowing for modern microservice solutions.

In the following more detailed possible implementations of an extended data exchange architecture are described with respect to OPC UA extended by a gRPC protocol. However, also other combinations of communication protocol independent data exchange architectures and remote procedure call protocols are possible and can be realized according to the below examples. For example, also OPC UA extended by SOAP can be advantageous.

The communication interface architecture comprising the extended data exchange architecture which extends OPC UA with gRPC enables communication with industrial automation systems and historians based on microservices architectures. Moreover, it simplifies the implementation of this communication by massively improving developer friendliness and therefore adoptability. The extended data exchange architecture can be implemented using various embodiments described below in more detail, e.g. legacy protocol data models can be reused based on a transpiler or manual translation, the remote procedure protocol can be implemented in the protocol layer or can be fully integration into the standard.

The potential synergy between OPC UA and gRPC can be subdivided into multiple embodiments which provide different advantages and improvements.

In an embodiment OPC UA information models referring to the data models of OPC UA are reused within gRPC. In this embodiment the protobuffer information description language (IDL) versions of the standard OPC UA information models are translated and stored as part of the architecture and can thus be utilized in the gRPC environment. Further, for also making custom data model extensions available to be utilized with in the gRPC environment a transpiler can be provided. The transpiler is configured to translate OPC UA NodeSet files into protobuffer IDL. In this embodiment, no compatibility of OPC UA with gRPC in the connectivity or transport layer is necessary. In practice, this has the impact that OPC UA information models are available for all gRPC supported programming languages, which means OPC UA models become first-class objects in these languages. This allows for vendor-agnostic systems to be implemented more easily, and data models can be derived based on a common underlying standard.

In a further embodiment the gRPC can be integrated in the OPC UA as part of the protocol layer. In this embodiment OPC UA supports protobuffers as a transport protocol. However in this embodiment custom data models cannot be used. In this embodiment OPC UA data source interfaces can provide a gRPC endpoint utilizing TCP/IP. This allows for an easy connecting to all gRPC supported programming languages using automatically generated clients. However, this does not necessarily mean that OPC UA information models are available as native objects in all gRPC supported programming languages. This means dealing with OPC UA data can still be complex for developers. Thus this embodiment can be combined with the embodiment above reusing the respective information models to increase developer friendliness. For example there a standard generic set of protobuffer definitions can be provided that can be used to connect arbitrary OPC UA servers. Also the OPC UA NodeSet file can be transpiled in protobuf IDL, wherein the OPC UA NodeSet file describes server-specific data models. In this case potentially existing generic objects can be replaced with custom objects.

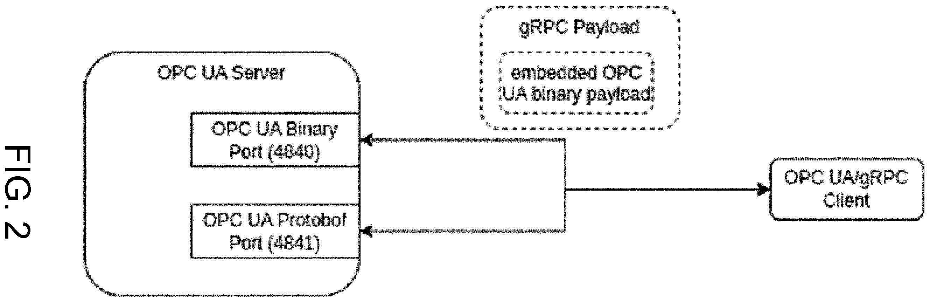

An example of an implementation of this embodiment is shown in Fig. 2. In this example, the data source interface is part of an OPC UA server. The communication interface architecture provides as part of the data source interface, in this example, at least two data communication ports. At least one data communication port, for example, port 4840 is configured to receive communication utilizing the standard OPC UA binary communication protocol and at least on other port, for instance, port 4841, is configured to receive communication utilizing the protobuffer protocol of the extended OPC UA. The data sink, here depicted as a client can then choose to which port to connect. The data received by the OPC UA binary protocol can be directly translated as part of the extended OPC UA architecture. Optionally, the extended OPC UA architecture can be configured to provide minimalistic generic calls, for instance, for discovering nodes and read/writes node values. In this optional embodiment the OPC UA binary data is embedded in a gRPC object to be processed by the extended OPC UA architecture. This optional embodiment allows to simplify the implementation and can also be utilized if not all OPC UA data models are translated into gRPC.

In a further embodiment gRPC can be fully integrated into the standard of OPC UA at the SDK level or even OPC UA can be reimplemented on-top of gRPC. In this case, the standard information models as well as custom gRPC extensions are integrated into the OPC UA standard, or that OPC UA becomes a standard that is implemented on-top of gRPC. An example for such an implementation is the implementation of Apache Arrow Flight, an ODBC successor, on-top of gRPC. This embodiment allows that the majority of an OPC UA Server and client implementation code (stubs) can be automatically generated in all gRPC supported programming languages.

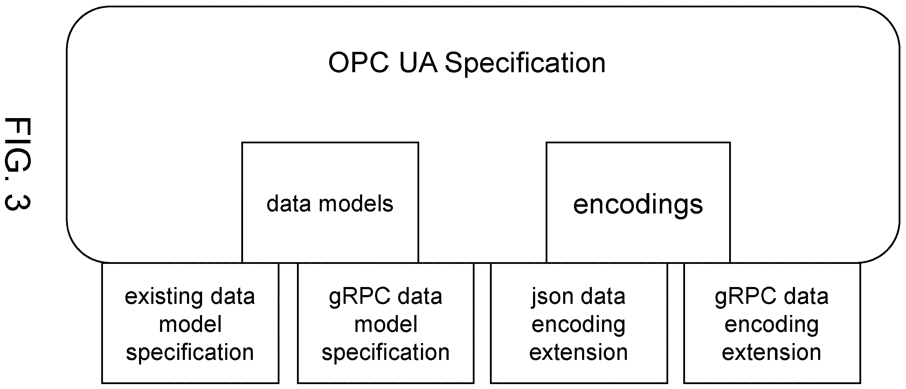

An example of the implementation of this embodiment is shown in Fig. 3. In this example the OPC UA specification is extended such that all defined data models are modeled exclusively based on protobuffer IDL. The gRPC extension then exists parallel to the standard OPC UA data models and encodings to allow for compliance with existing OPC UA servers and to allow for a respective communication with legacy data sinks/sources. Collision between the gRPC extension to already exiting OPC UA extensions can be resolved by providing a custom translation on a per-case basis. The extended OPC UA can only be implemented by newly implementing the extended data exchange architecture on the respective data sources/sinks.

When interfacing an automation layer in an industrial application, OPC UA is the protocol of choice. In most industrial use cases, containerized microservice workloads in the backend, e.g. models and further middleware, are working with data provided by an OPC UA data source, which means OPC UA data has to flow between microservices. This flow is drastically simplified by the embodiment described above in which at least some OPC UA data models are available directly as gRPC protobuffer, and consequently are first-class objects within various programming languages.

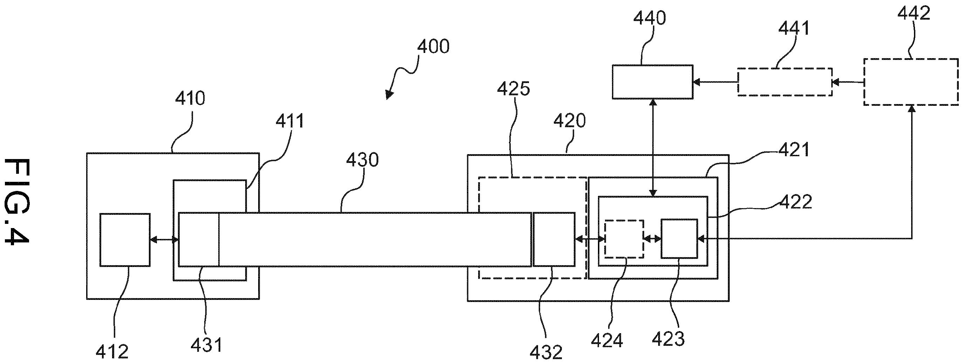

An example, of a respective application environment is shown in Fig. 4. Fig. 4 shows schematically and exemplarily a communication interface architecture as part of a computing framework 400 for processing plant process data 412 acquired with respect to a production process of an industrial plant comprising a plant control system 410. Generally, the industrial plant can refer to any technical infrastructure that is used for an industrial purpose. The industrial purpose may be manufacturing or processing of one or more industrial products, i.e., a manufacturing process or a processing performed by the industrial plant. For example, the industrial purpose can refer to the production of an industrial product. The industrial product can, for example, be any physical product such as a chemical, a biological, a pharmaceutical, a food, a beverage, a textile, a metal, a plastic, or a semiconductor. Additionally or alternatively, the industrial product can even be a service product such as electricity, heating, air conditioning, waste treatment such as recycling, chemical treatment such as breakdown or dissolution, or even incineration, etc. Accordingly, the industrial plant may be one or more of a chemical plant, a process plant, a pharmaceutical plant, a fossil fuel processing facility such as an oil and/or a natural gas well, a refinery, a petrochemical plant, a cracking plant, and the like. The industrial plant can even be any of a distillery, an incinerator, or a power plant. Moreover, the industrial plant can even be a combination of any of the examples given above.

For performing a production process, the industrial plant comprises a technical infrastructure which can be controlled by control parameters, wherein the control parameters can be regarded as being part of plant control data implemented by a process control system into the technical infrastructure for controlling the industrial plant. The technical infrastructure may comprise equipment or process units such as any one or more of a heat exchanger, a column such as a fractionation column, a furnace, a reaction chamber, a cracking unit, a storage tank, a precipitator, a pipeline, a stack, a filter, a valve, an actuator, a transformer, a circuit breaker, a machinery, e.g., a heavy duty rotating equipment such as a turbine, a generator, a pulverizer, a compressor, a fan, a pump, a motor, etc. Each of this technical infrastructure can provide monitoring data that monitors the functioning of the technical infrastructure. Moreover, the industrial plant typically comprises a plurality of sensors that allow to measure operational parameters of the technical infrastructure. The operational parameters measured by the sensors may relate to various process parameters and/or parameters related to the equipment or the process units. For example, sensors may be used for measuring a process parameter such as a flow rate within a pipeline, a level inside a tank, a temperature of a furnace, a chemical composition of a gas, etc., and some sensors can be used for measuring vibration of a turbine, a speed of a fan, an operating of a valve, a corrosion of a pipeline, a voltage across the transformer, etc. The functional parameters and the operational parameters can both be regarded as being part of the plant process data 412 acquired with respect to a production process of the industrial plant. The plant process data 412 can generally be part of the plant control system 410, for instance, can be acquired by and/or stored by the plant control system 410. Moreover, the plant control system 110 can also be adapted to further process the plant process data 412, for instance, to monitor, analyse and/or optimize the plant process data 412. However, in many applications the plant control system 410 is not configured to provide an up-to-date deep analysis and possible optimization of the plant process data 412 and in many cases even refers to a legacy system that does not provide the technical hard- and/or software infrastructure for an up-to-date data analysis of the plant process data 412. Accordingly, the plant process data is communicated to a processing system that allows for an up-to-date processing of the plant process data 412. Thus in this example, the plant control system is regarded as a data source for providing data to a data sink for further processing.

The computing framework 400 is provided with an edge computing device 420. The edge computing device 420 as data sink that is communicatively coupled with a data source interface 411 of the plant control system 410, that can also be regarded as part of the computing framework 400. In particular, the edge computing device 420 comprises an data sink interface computing unit 425 that provides together with the data source interface 411 the communication interface architecture with the extended data exchange architecture as described above for controlling the communication between the edge computing device 420 and the plant control system 410. Preferably, the data sink interface 425 is adapted to receive plant process data 412 from the data source interface 411 through the communicative coupling utilizing the extended data exchange architecture, as described above in more detail.

Moreover, the data sink interface 425 can be communicatively coupled via a protocol converter 430 to the data source interface 411. Preferably, the protocol converter 430 is configured to isolate and tunnel the plant process data 412 from the data source interface 411 to the data sink interface 425. This allows for a safe and effective transfer of the plant process data 412 from the plant control system 410 to the edge computing device 420. Moreover, the protocol converter 430 can generally be adapted to convert the plant process data 412 from a data format used by the plant control system 410 to a data format used by the edge computing device 420, in particular, by the interface computing unit 425 of the edge computing device 420. If the plant control system 410 refers to a legacy system utilizing a legacy data format, it is preferred that the protocol converter 430 is adapted to convert the plant process data 412 provided in the legacy data format at the data source interface 411 to a modern data format that can be utilized by the data sink interface 425. An example of a legacy data format that can be converted in a modern data format is the OPC DA data format still utilized by many plant control systems. In this case, it is preferred that the protocol converter 430 comprises an OPC DA-to-UA converter that allows to convert the OPC DA data to an OPC UA data format. However, if the plant control system 410 provides the plant process data 412 in the same data format as utilized by the data sink interface 425, the protocol converter430 can refer to a transparent communication unit that does not provide any conversion to the plant process data 412 but only provides an isolation and tunnelling of the plant process data 412 between the data source interface 411 and the data sink interface 425. Generally, the protocol converter 430 can be provided as part of the data source interface 411, as part of the data sink interface 425 or as part of both, the data source interface 411 and the data source interface 425 as indicated in Fig. 4 by the schematic parts of the protocol converter 431, 432 provided at each end of the communicative coupling.

The edge computing device 420 further comprises a container computing unit 421 configured to provide a container runtime environment 422, wherein on the container runtime environment 422 a process container 423 is provided. The container computing unit 421 can, for instance, be part of the operational system of the edge computing device 420 or, depending on the operational system running on the edge computing device 420, can also be provided with a virtual operating system different from the general operating system of the edge computing device 420. For example, if the edge computing device 420 is provided generally with a Windows operating system, the container computing unit 421 can be configured to run a virtual Linux environment operating system, since most of the container runtime environments 422 are provided as Linux-based runtime environments. The container runtime environment 422 is then adapted to provide the process container 423 comprising a processing program running inside the process container 423. The processing program is adapted to process the plant process data 412 acquired with respect to the production process of the industrial plant. For example, the processing program can be adapted to analyse the plant process data 412 and based on the analysis to provide optimized process control data that allows for an optimized control of the industrial plant.

Optionally, the edge computing device 420 further comprises an abstraction container 424 running on the container runtime environment 422, wherein the abstraction container 424 comprises an abstraction program. The abstraction program can be provided to pre-process the plant process data 412 before it is provided to the process container 423 comprising the processing program. For example, if the plant process data 412 is provided by the interface computing unit 425 in a format that cannot be processed by the processing program, the abstraction program can be adapted to pre-process the plant process data 412 such that it can be processed by the processing program. Such pre-processing can comprise, depending on the respective configuration and interaction of the interface server 411 with the interface computing unit 425 with respect to the providing and receiving of the plant process data 412, a filtering of the plant process data 412, a unit conversion of parameters being part of the plant process data 412, a rearranging of the plant process data 412, a selecting of the plant process data 412, etc. In a preferred embodiment, the processing program running on the process container 423 is adapted to provide, based on an analysis of the plant process data 412, plant control data that should be implemented into the plant control system 410. The process container 423 running on the container runtime environment 422 of the container computing unit 421 is then adapted to provide the plant control data to the interface computing unit 425. The interface computing unit 425 can then provide the plant control data, preferably, via the protocol converter 430, to the interface server 411 of the plant control system 410. In this case, the protocol converter 430 can be adapted to convert the plant control data from a data format utilized at the interface computing unit 425 to a data format utilized at the interface server 411, in particular, utilized by the plant control system 410. The plant control system 410 can then implement the received plant control data for controlling the industrial plant.

In a preferred embodiment, the containerized programs running in the container runtime environment 422 are deployed by a continuous integration and continuous delivery (CI/CD) workflow. This workflow is indicated by the workflow systems 440 to 442. In particular, the CI/CD workflow is based on providing a control system and container registry 440, for instance, on an external cloud-based server. The control system can, for instance, be adapted to deploy and manage all versions of the processing program and/or the abstraction program, for instance, by checking if a more updated version of the processing program is available and by then providing the update to the container runtime environment 422, for instance, by replacing the currently running processing program with the updated version of the processing program. Moreover, a container registry can be provided that registers, respectively, all containerized programs running on edge computing devices of a plurality of industrial plants, to provide an overview of all containerized programs currently utilized. Optionally, the CI/CD workflow can further comprise software and/or hardware 442 that is adapted to continuously receive and monitor the output and input to the processing program, for instance, the plant process data 412 as input and the plant control data as output. This external software/hardware 442 can then be adapted to analyse and monitor the running of the processing program, for instance, using artificial intelligence systems. Based on this monitoring and analysis, a software/hardware 441 can be provided that continuously improves the processing program and, for instance, provides updated versions of the processing program to the control system 440.

Other variations to the disclosed embodiments can be understood and effected by those skilled in the art in practicing the claimed invention, from a study of the drawings, the disclosure, and the appended claims.

For the processes and methods disclosed herein, the operations performed in the processes and methods may be implemented in differing order. Furthermore, the outlined operations are only provided as examples, and some of the operations may be optional, combined into fewer steps and operations, supplemented with further operations, or expanded into additional operations without detracting from the essence of the disclosed embodiments.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Computational procedures performed by one or several units or devices can be performed by any other number of units or devices. These procedures can be implemented as program code means of a computer program and/or as dedicated hardware.

A computer program product may be stored/distributed on a suitable medium, such as an optical storage medium or a solid-state medium, supplied together with or as part of other hardware, but may also be distributed in other forms, such as via the Internet or other wired or wireless telecommunication systems.

Any units described herein may be processing units that are part of a classical computing system. Processing units may include a general-purpose processor and may also include a field programmable gate array (FPGA), an application specific integrated circuit (ASIC), or any other specialized circuit. Any memory may be a physical system memory, which may be volatile, non-volatile, or some combination of the two. The term "memory" may include any computer-readable storage media such as a non-volatile mass storage. If the computing system is distributed, the processing and/or memory capability may be distributed as well. The computing system may include multiple structures as "executable components". The term "executable component" is a structure well understood in the field of computing as being a structure that can be software, hardware, or a combination thereof. For instance, when implemented in software, one of ordinary skill in the art would understand that the structure of an executable component may include software objects, routines, methods, and so forth, that may be executed on the computing system. This may include both an executable component in the heap of a computing system, or on computer-readable storage media. The structure of the executable component may exist on a computer-readable medium such that, when interpreted by one or more processors of a computing system, e.g., by a processor thread, the computing system is caused to perform a function. Such structure may be computer readable directly by the processors, for instance, as is the case if the executable component were binary, or it may be structured to be interpretable and/or compiled, for instance, whether in a single stage or in multiple stages, so as to generate such binary that is directly interpretable by the processors. In other instances, structures may be hard coded or hard wired logic gates, that are implemented exclusively or near-exclusively in hardware, such as within a field programmable gate array (FPGA), an application specific integrated circuit (ASIC), or any other specialized circuit. Accordingly, the term "executable component" is a term for a structure that is well understood by those of ordinary skill in the art of computing, whether implemented in software, hardware, or a combination. Any embodiments herein are described with reference to acts that are performed by one or more processing units of the computing system. If such acts are implemented in software, one or more processors direct the operation of the computing system in response to having executed computer-executable instructions that constitute an executable component. Computing system may also contain communication channels that allow the computing system to communicate with other computing systems over, for example, network. A "network" is defined as one or more data links that enable the transport of electronic data between computing systems and/or modules and/or other electronic devices. When information is transferred or provided over a network or another communications connection, for example, either hardwired, wireless, or a combination of hardwired or wireless, to a computing system, the computing system properly views the connection as a transmission medium. Transmission media can include a network and/or data links which can be used to carry desired program code means in the form of computer-executable instructions or data structures and which can be accessed by a general-purpose or specialpurpose computing system or combinations. While not all computing systems require a user interface, in some embodiments, the computing system includes a user interface system for use in interfacing with a user. User interfaces act as input or output mechanism to users for instance via displays.

Those skilled in the art will appreciate that at least parts of the invention may be practiced in network computing environments with many types of computing system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, pagers, routers, switches, datacenters, wearables, such as glasses, and the like. The invention may also be practiced in distributed system environments where local and remote computing system, which are linked, for example, either by hardwired data links, wireless data links, or by a combination of hardwired and wireless data links, through a network, both perform tasks. In a distributed system environment, program modules may be located in both local and remote memory storage devices.

Those skilled in the art will also appreciate that at least parts of the invention may be practiced in a cloud computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources, e.g., networks, servers, storage, applications, and services. The definition of "cloud computing" is not limited to any of the other numerous advantages that can be obtained from such a model when deployed. The computing systems of the figures include various components or functional blocks that may implement the various embodiments disclosed herein as explained. The various components or functional blocks may be implemented on a local computing system or may be implemented on a distributed computing system that includes elements resident in the cloud or that implement aspects of cloud computing. The various components or functional blocks may be implemented as software, hardware, or a combination of software and hardware. The computing systems shown in the figures may include more or less than the components illustrated in the figures and some of the components may be combined as circumstances warrant.

Any reference signs in the claims should not be construed as limiting the scope.

The invention refers to a communication interface architecture for providing data from a data source to a data sink. A data source interface is configured to access data from one or more data sources and provide requested data to a data sink. A data sink interface is configured to communicate with the data source interface for requesting data from the one or more data sources to be provided to the data sink, wherein the data source interface and/or the data sink interface is configured to provide a data exchange architecture that is communication protocol independent and extended by a remote procedure call protocol.

## Claims

1. A communication interface architecture for providing data from a data source to a data sink, wherein the architecture comprises:
a data source interface configured to access data from one or more data sources and providing requested data to a data sink, and
a data sink interface configured to communicate with the data source interface for requesting data from the one or more data sources to be provided to the data sink, wherein the data source interface and/or the data sink interface is configured to provide a data exchange architecture that is communication protocol independent and extended by a remote procedure call protocol.

2. The communication interface architecture according to claim 1, wherein the data exchange architecture comprises a protocol layer that is independent of a semantic layer, wherein the semantic layer defines a data model and the protocol layer defines the communication utilizing the data model of the semantic model.

3. The communication interface architecture according to any of claims 1 and 2, wherein the data exchange architecture is OPC UA.

4. The communication interface architecture according to any of the preceding claims, wherein the remote procedure call protocol is a gRPC or SOAP protocol.

5. The communication interface architecture according to any of the preceding claims, wherein the extended data exchange architecture includes translations of data models of the data exchange architecture into a respective data encoding system of the remote procedure call protocol.

6. The communication interface architecture according to any of the preceding claims, wherein the extended data exchange architecture includes a transpiler fortranspiling the data models of the data exchange architecture into a respective data encoding system of the remote procedure call protocol.

7. The communication interface architecture according to any of the preceding claims, wherein the data source interface is configured to provide at least two ports for being accessed by the data sink interface, wherein at least one port is configured to utilise the data exchange architecture data transport protocol and at least one other port is configured to utilize the remote procedure call data transport protocol for communication.

8. The communication interface architecture according to any of the preceding claims, wherein the extended data exchange architecture includes, for each data model of the data exchange architecture, a translation into a respective data encoding system of the remote procedure call protocol.

9. A distributed computing system comprising a plurality of computers comprising the communication interface architecture according to any of claims 1 to 8.

10. A communication interface method for providing data from a data source to a data sink, wherein the method comprises:
providing a data source interface configured to access data from one or more data sources and providing requested data to a data sink, and
providing a data sink interface allowing a data sink to communicate with the data source interface for requesting data from the one or more data sources, wherein the data source interface is configured to provide a data exchange architecture that is communication protocol independent and extended by a remote procedure call protocol.

11. A data exchange method for transferring data between a data source and a data sink utilizing the communication interface architecture according to any of claims 1 to 8, wherein the method comprises requesting and receiving, at a data sink, data from a data source based on the extended data exchange architecture.

12. A computer program product for providing data from a data source to a data sink, wherein the computer program product causes a communication interface architecture according to any of claims 1 to 8 to carry out the method according to claim 11.
